# EUROPÄISCHE PATENTANMELDUNG

(11) **EP 0 993 107 A2**
(43) Veröffentlichungstag der Anmeldung: **12.04.2000**
(21) Anmeldenummer: 99810732.0
(22) Anmeldetag: 13.08.1999
(51) Int. Cl.: H02M 7/48

(54) **Stromrichterschaltung**

(30) Priorität: 05.10.1998 DE 19845714
(71) Anmelder: ABB Daimler-Benz Transportation (Technology) GmbH, 13627 Berlin (DE)
(72) Erfinder: Hilpert, Gerald, 79787 Lauchringen (DE); Umbricht, Stefan, 5417 Untersiggenthal (CH); Salama, Samir Dr., 13591 Berlin (DE)
(74) Vertreter: Kaiser, Helmut, Dr.

(57) **Zusammenfassung**

Eine Stromrichterschaltung (10) umfasst einen Zwischenkreis (11), einen über zwei Verbindungsleitungen (18, 19) an den Zwischenkreis (11) angeschlossenen, ausgangsseitigen Stromrichter, insbesondere Motorstromrichter (13), welcher eine Mehrzahl von Leistungshalbleiterschaltern (T3) umfasst und eine an seinem Eingang anliegende Gleichspannung in eine Wechselspannung umwandelt, einen zwischen dem Zwischenkreis (11) und dem ausgangsseitigen Stromrichter (13) angeordneten Resonanzkreis (12) zur Schaltentlastung der Leistungshalbleiterschalter (T3) des ausgangsseitigen Stromrichters (13), welcher Resonanzkreis (12) wenigstens eine, in einer der beiden Verbindungsleitungen (18, 19) angeordnete Resonanzkreisdrossel (L1) umfasst, sowie Mittel (16, 17) zum Einspeisen der Gleichspannung für den ausgangsseitigen Stromrichter (13).

Bei einer solchen Stromrichterschaltung wird eine Reduzierung des Aufwandes im Resonanzkreis dadurch erreicht, dass die Einspeisungsmittel (16, 17) zwischen dem Resonanzkreis (12) und dem ausgangsseitigen Stromrichter (13) an die Verbindungsleitungen (18, 19) angeschlossen sind.

## Beschreibung

### TECHNISCHES GEBIET

Die vorliegende Erfindung bezieht sich auf das Gebiet der Leistungselektronik. Sie betrifft eine Stromrichterschaltung, umfassend einen Zwischenkreis, einen über zwei Verbindungsleitungen an den Zwischenkreis angeschlossenen, ausgangsseitigen Stromrichter, insbesondere Motorstromrichter, welcher eine Mehrzahl von Leistungshalbleiterschaltern umfasst und eine an seinem Eingang anliegende Gleichspannung in eine insbesondere 3-phasige Wechselspannung umwandelt, einen zwischen dem Zwischenkreis und dem ausgangsseitigen Stromrichter angeordneten Resonanzkreis zur Schaltentlastung der Leistungshalbleiterschalter des ausgangsseitigen Stromrichters, welcher Resonanzkreis wenigstens eine, in einer der beiden Verbindungsleitungen angeordnete Resonanzkreisdrossel umfasst, sowie Mittel zum Einspeisen der Gleichspannung für den ausgangsseitigen Stromrichter.

Eine solche Stromrichterschaltung ist z.B. aus der Druckschrift DE-C1-196 36 248 bekannt.

### STAND DER TECHNIK

In der eingangs genannten Druckschrift ist ein Verfahren bzw. eine Schaltungsanordnung angegeben worden, mit denen die IGBT-Leistungshalbleiterschalter eines an eine Gleichspannungsquelle, insbesondere mit einem Zwischenkreis, angeschlossenen Wechselrichters beim Schalten entlastet werden können. Hierzu wird zwischen der Gleichspannungsquelle und dem Eingang des Wechselrichters eine steuerbare Resonanzschaltung angeordnet, die eine in einer der beiden Verbindungsleitungen liegende Einschalt-Entlastungsdrosselspule und einen mit dieser Einschalt-Entlastungsdrosselspule über einen Halbleiterschalter mit antiparalleler Diode verbindbaren Abschaltentlastungskondensator umfasst.

Die angegebene Entlastungsschaltung reduziert zwar die Schaltverlustleistungen der Wechselrichterschalter beim Einschalten erheblich, hat jedoch auch einen Nachteil: Da die Einschalt-Entlastungsdrosselspule zwischen der Gleichspannungsquelle und dem Eingang des Wechselrichters angeordnet ist, muss sie den gesamten Strom führen, der zwischen der Gleichspannungsquelle und dem Wechselrichter fliesst. In dem Fall, in welchem die Gleichspannungsquelle beispielsweise aus einem Stromrichter mit nachgeschaltetem Zwischenkreis besteht, muss die Einschalt-Entlastungsdrosselspule daher neben dem Strom, der in den Kondensatoren des Zwischenkreises fliesst, auch den Gleichstromanteil des Zwischenkreisstromes führen. Dies hat zur Folge, dass die Einschalt-Entlastungsdrosselspule leistungsmässig entsprechend ausgelegt werden muss, was nicht nur bei der Spule selbst, sondern auch bei den Verbindungsleitungen einen erhöhten Aufwand verursacht.

### DARSTELLUNG DER ERFINDUNG

Es ist daher Aufgabe der Erfindung, eine Stromrichterschaltung anzugeben, welche die Nachteile der bekannten Schaltung vermeidet und insbesondere im Hinblick auf die verwendete Entlastungs- bzw. Resonanzkreisdrossel mit deutlich geringeren Leistungsanforderungen auskommt.

Die Aufgabe wird bei einer Stromrichterschaltung der eingangs genannten Art dadurch gelöst, dass die Einspeisungsmittel zwischen dem Resonanzkreis und dem ausgangsseitigen Stromrichter an die Verbindungsleitungen angeschlossen sind. Der Kern der Erfindung besteht also darin, die Einspeisung schaltungsmässig so vorzunehmen, dass der Gleichstromanteil nicht über die Resonanzkreisdrossel, sondern direkt von der Gleichspannungsquelle zum ausgangsseitigen Stromrichter fliesst. Dies wird erfindungsgemäss dadurch erreicht, dass eine direkte Verbindung zwischen Gleichspannungsquelle und ausgangsseitigem Stromrichter besteht und der Zwischenkreis lediglich über die Resonanzkreisdrossel an diese direkte Verbindung angekoppelt ist. Damit fliesst der (vergleichsweise hohe) Gleichstromanteil an der Resonanzkreisdrossel vorbei direkt von der Gleichspannungsquelle zum Eingang des ausgangsseitigen Stromrichters. Durch die Resonanzkreisdrossel fliessen dagegen nur noch die Wechselstromanteile aus den Kondensatoren des Zwischenkreises. Entsprechend günstig kann die Resonanzkreisdrossel dimensioniert werden.

Eine erste bevorzugte Ausführungsform der Schaltung nach der Erfindung ist dadurch gekennzeichnet, dass die Einspeisungsmittel einen Netzstromrichter umfassen, welcher über Verbindungsmittel an ein Wechselstromnetz anschliessbar ist. Bei dieser Ausführungsform kann bei entsprechender Ansteuerung der Resonanzkreis sowohl für die Entlastung der Schaltelemente im Netzstromrichter, als auch für die Schaltelemente im ausgangsseitigen Stromrichter (Wechselrichter) eingesetzt werden. Auf diese Weise lässt sich mit einem minimalen Aufwand an Schaltungskomponenten, d.h., mit nur einem Resonanzkreis, - bei allerdings etwas erhöhtem Steuerungsaufwand - eine wirksame Entlastung für beide Stromrichter durchführen.

Eine zweite bevorzugte Ausführungsform der erfindungsgemässen Schaltung ist dadurch gekennzeichnet, dass die Einspeisungsmittel Verbindungsmittel umfassen, mittels derer die Stromrichterschaltung mit einem Gleichstromnetz verbindbar ist. Da bei dieser Ausführungsform nur ein Stromrichter vorhanden ist, dient der Resonanzkreis in diesem Fall nur der Entlastung dieses einen (ausgangsseitigen) Stromrichters.

Besonders günstig wirkt sich die durch die Erfindung ermöglichte Redimensionierung der Resonanzkreisdrossel und die damit verbundene Platzerspamis aus, wenn gemäss einer weiteren Ausführungsform der ausgangsseitige Stromrichter ein Motorstromrichter ist, welcher den Motor eines Schienenfahrzeugs versorgt, und die Verbindungsmittel ein auf der Schiene laufendes Rad und einen Stromabnehmer für eine Oberleitung umfassen.

Der Resonanzkreis umfasst vorzugsweise einen Resonanzkreiskondensator, welcher über einen in Serie liegenden ersten Leistungshalbleiterschalter mit antiparalleler Diode mit der wenigstens einen Resonanzkreisdrossel verbindbar ist, wobei entweder die Serieschaltung aus Resonanzkreiskondensator und erstem Leistungshalbleiterschalter zu der wenigstens einen Resonanzkreisdrossel parallelgeschaltet ist, oder die Serieschaltung aus Resonanzkreiskondensator und erstem Leistungshalbleiterschalter zwischen den beiden Verbindungsleitungen angeordnet ist. Bei der ersten der beiden Alternativen kann dabei der Resonanzkreiskondensator kleiner gewählt werden als bei der anderen Alternative.

Eine weitere bevorzugte Ausführungsform der erfindungsgemässen Schaltung, die sich für eine Entlastung sowohl beim Ausschalten als auch beim Einschalten eignet, ist dadurch gekennzeichnet, dass dem Resonanzkreiskondensator ein über einen zweiten Leistungshalbleiterschalter mit antiparalleler Diode zuschaltbarer Clampkondensator parallelgeschaltet ist.

Besonders gering sind die Rückwirkungen des Resonanzkreises auf das Netz aus Symmetriegründen, wenn gemäss einer weiteren bevorzugten Ausführungsform der Schaltung nach der Erfindung der Resonanzkreis zwei gleich grosse Resonanzdrosseln umfasst, die jeweils in einer der beiden Verbindungsleitungen angeordnet sind.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das Prinzipschaltbild eines ersten bevorzugten Ausführungsbeispiels einer Stromrichterschaltung nach der Erfindung für ein an einem Gleichstromnetz betriebenes Schienenfahrzeug;
- Fig. 2: das Prinzipschaltbild eines zweiten bevorzugten Ausführungsbeispiels einer Stromrichterschaltung nach der Erfindung für ein an einem Wechselstromnetz betriebenes Schienenfahrzeug; und
- Fig. 3-9: verschiedene alternative Ausführungsbeispiele für den Resonanzkreis aus Fig. 1 und 2, wobei

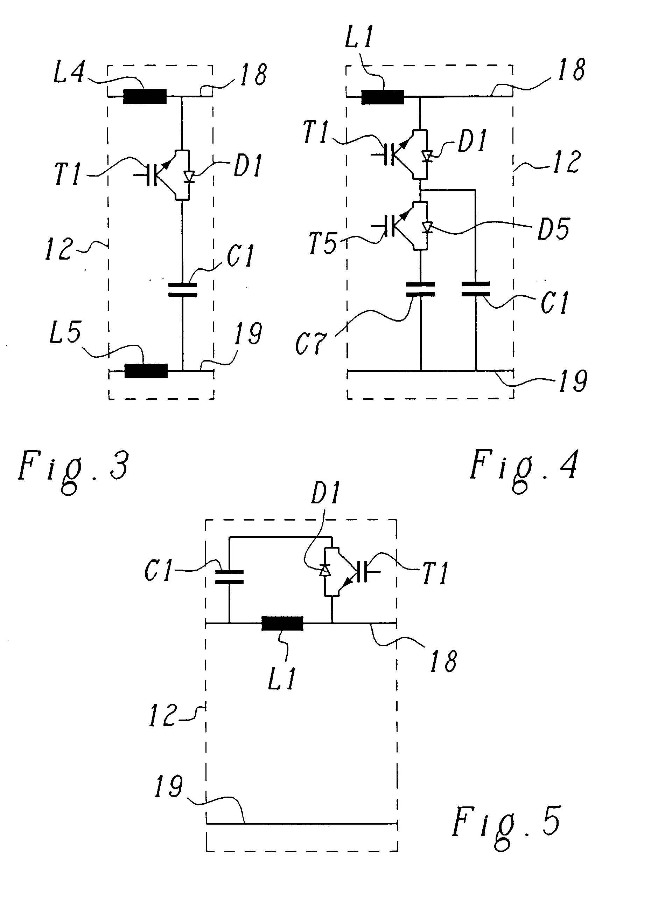

- Fig. 3: einen Resonanzkreis mit einem symmetrisch angeordneten Paar von Resonanzkreisdrosseln zeigt;
- Fig. 4: einen Resonanzkreis mit zusätzlicher Abschaltentlastung zeigt;
- Fig. 5: einen Resonanzkreis mit alternativer Entlastungsschaltung zeigt; und

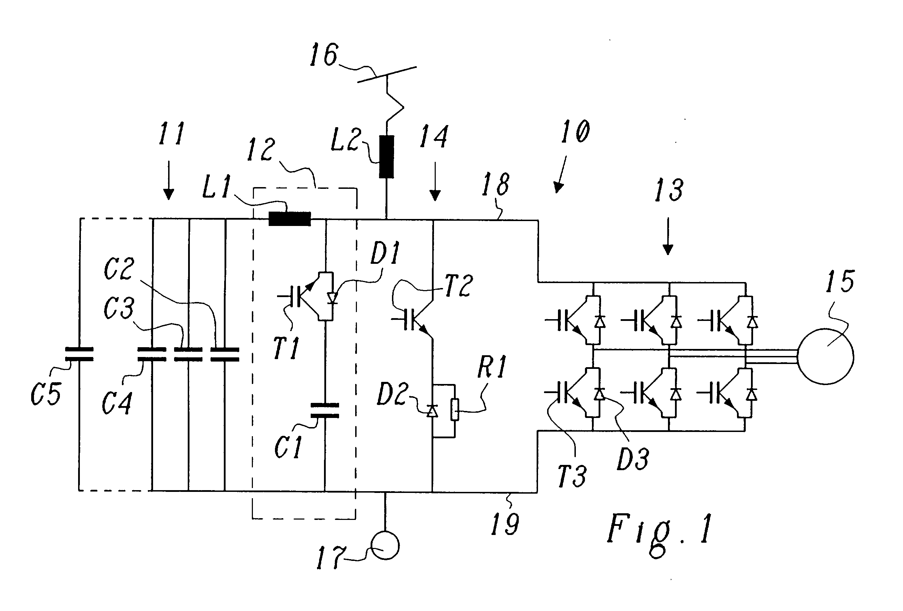

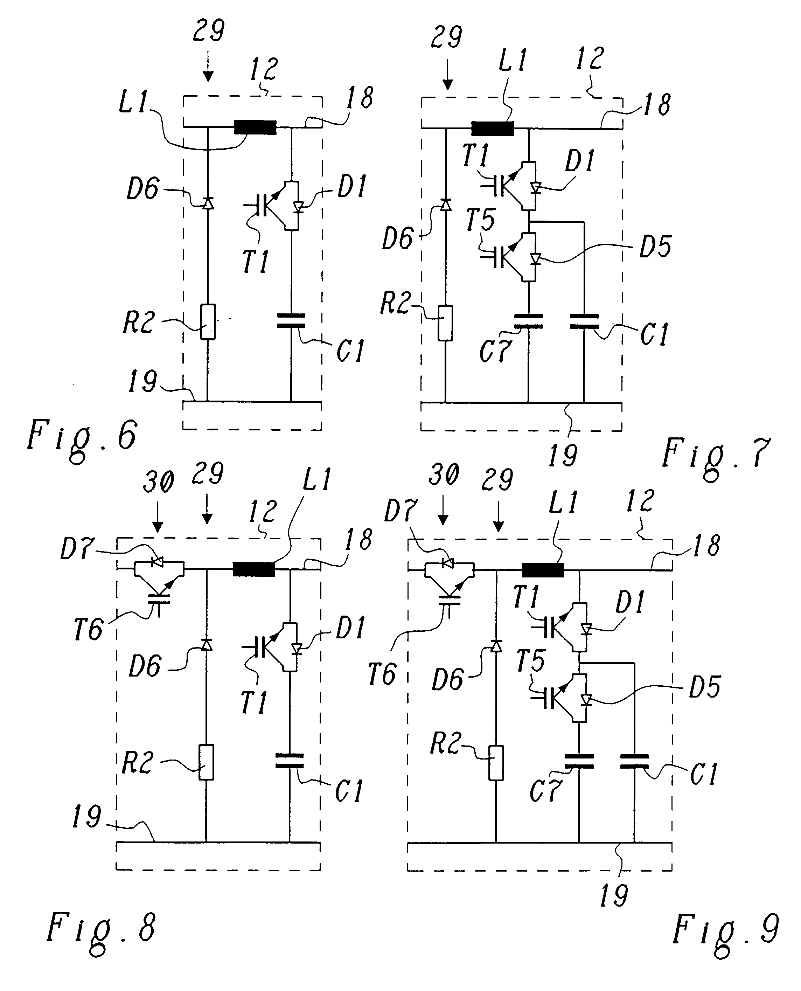

- Fig. 6-9: die beiden Ausführungsbeispiele des Resonanzkreises nach Fig. 1 und Fig. 4 mit zusätzlicher Umschwingentlastungsschaltung (Fig. 6 und 7) und mit zusätzlichem Kurzschlussstromabschalter (Fig. 8 und 9) zeigt.

### WEGE ZUR AUSFÜHRUNG DER ERFINDUNG

In Fig. 1 ist das Prinzipschaltbild eines ersten bevorzugten Ausführungsbeispiels einer Stromrichterschaltung nach der Erfindung für ein an einem Gleichstromnetz betriebenes Schienenfahrzeug dargestellt. Die Stromrichterschaltung 10 umfasst als ausgangsseitigen Stromrichter (Wechselrichter) einen Motorstromrichter 13, der als Brückenschaltung aus einer Mehrzahl von IGBTs T3 mit entsprechender antiparalleler Diode D3 aufgebaut ist. Der Motorstromrichter 13 erzeugt aus der am Eingang anliegenden Gleichspannung durch entsprechendes Ein- und Ausschalten der IGBTs T3 eine 3-phasige Wechselspannung, die zur Speisung eines Motors 15 dient, der beispielsweise als Fahrmotor arbeitet. Der Gleichspannungseingang des Motorstromrichters 13 ist über zwei Verbindungsleitungen 18, 19 mit einem Zwischenkreis 11 verbunden, der im gezeigten Beispiel eine Mehrzahl von parallelgeschalteten Zwischenkreiskondensatoren C2,..,C5 aufweist. Der Zwischenkreis 11 dient im wesentlichen zur Glättung von eventuellen Spannungsschwankungen, die in der Gleichspannung vorhanden sein können, mit welcher der Motorstromrichter 13 versorgt wird.

Zwischen dem Zwischenkreis 11 und dem Eingang des Motorstromrichters 13 ist ein (in der Fig. 1 mit einem gestrichelten Kasten umrahmter) Resonanzkreis 12 angeordnet, der in der dargestellten Konfiguration zur Verringerung der Einschaltverluste der IGBTs T3 im Motorstromrichter 13 dient (sog. "soft-switching"). Der Resonanzkreis 12 besteht in diesem Fall aus einer in der einen Verbindungsleitung 18 angeordneten Resonanzkreisdrossel L1 und einem zwischen den Verbindungsleitungen liegenden Resonanzkreiskondensator C1, der über einen IGBT T1 mit antiparalleler Diode D1 mit der Resonanzkreisdrossel L1 zu einem Schwingkreis zusammengeschaltet werden kann. Der Resonanzkreis 12 in dieser Form ist aus der eingangs genannten Druckschrift DE-C1-196 36 248 bekannt. Zur Erklärung seiner Ansteuerung und Funktion sei daher der Einfachheit halber auf diese Schrift verwiesen.

Im Stand der Technik, wie er durch die DE-C1-196 36 248 bekannt geworden ist, ist die Gleichspannungsquelle, die zur Versorgung des ausgangsseitigen Stromrichters mit Gleichspannung dient, links vom Resonanzkreis angeordnet, d.h., der Resonanzkreis befindet sich zwischen der Gleichspannungsquelle und dem Stromrichter. Dies hat den bereits weiter oben erwähnten Nachteil, dass der gesamte Strom zum Stromrichter durch die Resonanzkreisdrossel fliessen muss. In der Stromrichterschaltung 10 gemäss Fig. 1 ist die Situation bezüglich der Gleichspannungsquelle grundsätzlich anders. Die Gleichspannungsquelle, die hier als Gleichstromnetz ausgebildet ist, welches über ein schienengebundenes Rad 17 und über einen Stromabnehmer 16 und eine Eingangsfilterdrossel L2 an die Stromrichterschaltung 10 angeschlossen ist, wird mit den Verbindungsleitungen 18, 19 rechts vom Resonanzkreis 12 verbunden, d.h. die Gleichspannungsquelle liegt zwischen dem Resonanzkreis 12 und dem Motorstromrichter 13. Die Resonanzkreisdrossel L1 führt so nur den (vergleichsweise kleinen) Strom, der auch in den Zwischenkreiskondensatoren C2,..,C5 fliesst. Der Gleichstromanteil des Zwischenkreisstromes fliesst dagegen an der Resonanzkreisdrossel L1 vorbei direkt zum Motorstromrichter 13. Entsprechend kann die Resonanzkreisdrossel L1 leistungsmässig kleiner ausgelegt werden. Dasselbe gilt für die Verbindungen vom Resonanzkreis 12 zum Zwischenkreis 11. Selbstverständlich können bei der Schaltungskonfiguration der Fig. 1 ohne Einschränkungen zusätzliche Schaltungsmassnahmen zur Erweiterung der Funktion der Stromrichterschaltung vorgesehen werden. So ist es beispielsweise denkbar, zwischen dem Resonanzkreis 12 und dem Motorstromrichter 13 in an sich bekannter Weise einen Bremssteller 14 anzuordnen, der eine Serieschaltung aus einem IGBT T2 und einer Parallelschaltung aus Diode D2 und Widerstand R1 umfasst.

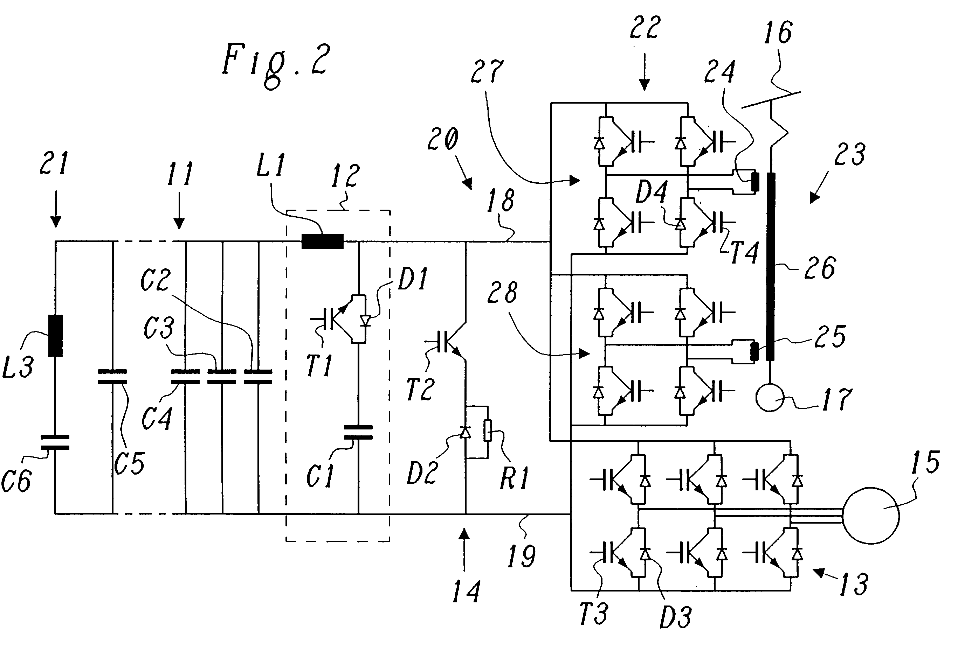

Wird das beispielhafte Schienenfahrzeug aus einem Wechselspannungsnetz versorgt, bietet sich die Stromrichterschaltung 20 gemäss Fig. 2 an. Auch hier sind wieder der aus dem Motorstromrichter 13 versorgte Motor 15, der mit dem Eingang des Motorstromrichters 13 über Verbindungsleitungen 18, 19 verbundene Zwischenkreis 11, der Resonanzkreis 12 und der Bremssteller 14 vorhanden. Zusätzlich kann optional am Zwischenkreis 11 (wie in Fig. 2 gezeigt) oder zwischen den Verbindungsleitungen 18, 19 in an sich bekannter Weise auch noch ein Saugkreis 21 aus einer Saugkreisdrossel L3 und einem Saugkreiskondensator C6 angeschlossen sein. Die Gleichspannungsquelle wird in diesem Fall von einem Netzstromrichter 22 gebildet, der (ohne Beschränkung der Allgemeinheit) zwei parallele Brückenschaltungen 27, 28 mit jeweils einer Mehrzahl von IGBTs T4 mit antiparalleler Diode D4 umfasst. Die Brückenschaltungen 27, 28 sind mit ihren Wechselspannungseingängen jeweils an eine Sekundärwicklung 24, 25 eines Netztransformators 23 angeschlossen, dessen Primärwicklung 26 über das schienengebundene Rad 17 und den Stromabnehmer 16 mit dem Wechselspannungsnetz verbunden wird. Selbstverständlich sind zur Bereitstellung der Gleichspannung auch andere Stromrichterkonfigurationen denkbar. Auch im Fall der Fig. 2 ist die Gleichspannungsquelle zwischen dem Resonanzkreis 12 und dem Motorstromrichter 13 an die Verbindungsleitungen 18, 19 angeschlossen, so dass sich die bereits oben beschriebenen Vorteile hinsichtlich der Resonanzkreisdrossel L1 ergeben.

Ein weiterer Vorteil der Stromrichterschaltung aus Fig. 2 lässt sich wie folgt beschreiben: Bei entsprechender Ansteuerung des Resonanzkreises 12 kann der Resonanzkreis 12 nicht nur zur Herabsetzung der Einschaltverluste im Motorstromrichter 13 verwendet werden, sondern auch zur Herabsetzung der Einschaltverluste im Netzstromrichter 22. Auf diese Weise können - bei etwas erhöhtem Ansteuerungsaufwand - unter Einsparung von Bauteilen mit einem einzigen Resonanzkreis 12 die Einschaltverluste zweier Stromrichter, nämlich 13 und 22, verringert werden.

Der Resonanzkreis 12 ist in den Ausführungsbeispielen der Fig. 1 und 2 in einer einfachen Grundkonfiguration dargestellt. Andere im Rahmen der Erfindung mögliche Konfigurationen des Resonanzkreises 12 ergeben sich aus den Fig. 3 bis 9:

Beim Resonanzkreis 12 der Fig. 3 ist die (unsymmetrische) Resonanzkreisdrossel L1 in der Verbindungsleitung 18 durch zwei (symmetrische) Resonanzkreisdrosseln L4 und L5 ersetzt, die jeweils in einer Verbindungsleitung 18 bzw. 19 angeordnet sind, und im wesentlichen gleich sind. Durch diese Art der Symmetrierung können die unerwünschten Netzrückwirkungen der Stromrichterschaltung erheblich verringert werden, was einen wesentlichen Vorteil darstellt.

Beim Resonanzkreis 12 der Fig. 4 ist parallel zum Resonanzkreiskondensator C1 eine zusätzliche Serieschaltung aus einem Clampkondensator C7 und einem IGBT T5 mit antiparalleler Diode D5 vorgesehen. Mit dieser Erweiterung können neben den Einschaltverlusten auch die Ausschaltverluste begrenzt werden. Die Funktionsweise dieser an sich bekannten Schaltung ist beispielsweise in der Druckschrift DE-C2-42 33 573 beschrieben.

Bei der alternativen Konfiguration der Fig. 5 ist die Serieschaltung aus Resonanzkreiskondensator C1 und IGBT T1 (mit Diode D1) parallel zur Resonanzkreisdrossel L1 angeordnet. Die Funktionsweise dieser an sich bekannten Schaltung ist in der DE-C1-196 36 248 beschrieben.

Bei den Konfigurationen des Resonanzkreises 12 aus Fig. 6 und 7 ist der aus Fig. 1 bzw. Fig. 4 bekannten Basiskonfiguration jeweils eine Umschwingentlastungsschaltung 29 zugefügt, die aus einer Diode D6 und einem Widerstand R2 besteht. Diese Umschwingentlastungsschaltung 29 übernimmt nach einer Durchzündung den Stossstrom, sobald die Spannung an den Zwischenkreiskondensatoren C2,..,C5 beginnt, negativ zu werden. Mit Hilfe dieser Entlastungsschaltung wird ein wesentlicher Teil der im System gespeicherten Energie nicht in einer Fehlerstelle, sondern im dafür dimensionierten Widerstand R2 in Wärme umgesetzt.

Bei den Konfigurationen des Resonanzkreises 12 aus Fig. 8 und 9 ist den aus Fig. 6 bzw. Fig. 7 bekannten Konfigurationen zusätzlich ein Kurzschlussstromabschalter 30 (IGBT T6 mit antiparalleler Diode D7) zugefügt. Der Kurzschlussstromabschalter 30 schaltet nach einer Durchzündung den Kurzschlussstrom aus den Zwischenkreiskondensatoren C2,..,C5 ab. Durch die Resonanzkreisdrossel L1 wird das di/dt im Kurzschlussfall reduziert und damit der Diodenabriss, welcher bei vorgefluteter Diode auftritt, wesentlich entschärft.

Insgesamt ergibt sich mit der Erfindung eine Stromrichterschaltung, die sich durch folgende Merkmale und Vorteile auszeichnet:
- Mit Hilfe des Resonanzkreises werden die Schaltverlustleistungen der Halbleiterschalter reduziert ("soft-switching"). Damit sind die Stromrichter in der Lage, eine höhere maximale Leistung zu übertragen als im hart geschalteten Betrieb.
- Der Zwischenkreis muss nicht mehr derart niederinduktiv aufgebaut werden wie im Falle der bisher üblichen hart geschalteten Stromrichtertopologien.
- Der Stossstrom, welcher sich bei einer Durchzündung (Fehlerfall) beider Halbleiterelemente eines Zweigpaares im Motorstromrichter bzw. im Netzstromrichter ergibt, wird durch die Resonanzkreisdrossel wesentlich bedämpft. Die bei den hart geschalteten Stromrichtertopologien vorgesehene ohmsche Bedämpfung des Stossstromes (Kurzschlussstrombegrenzer) kann damit eventuell entfallen oder zumindest reduziert werden.

### BEZUGSZEICHENLISTE

- 10,20: Stromrichterschaltung
- 11: Zwischenkreis
- 12: Resonanzkreis
- 13: Motorstromrichter
- 14: Bremssteller
- 15: Motor
- 16: Stromabnehmer
- 17: Rad
- 18,19: Verbindungsleitung
- 21: Saugkreis
- 22: Netzstromrichter
- 23: Netztransformator
- 24,25: Sekundärwicklung
- 26: Primärwicklung
- 27,28: Brückenschaltung
- 29: Umschwingentlastungsschaltung
- 30: Kurzschlussstromabschalter
- C1: Resonanzkreiskondensator
- C2,..,C5: Zwischenkreiskondensator
- C6: Saugkreiskondensator
- C7: Clampkondensator
- D1,..,D7: Diode
- L1,L4,L5: Resonanzkreisdrossel
- L2: Eingangsfilterdrossel
- L3: Saugkreisdrossel
- R1,R2: Widerstand
- T1,..,T6: IGBT (Leistungshalbleiterschalter)

## Patentansprüche

1. Stromrichterschaltung (10, 20), umfassend einen Zwischenkreis (11), einen über zwei Verbindungsleitungen (18, 19) an den Zwischenkreis (11) angeschlossenen, ausgangsseitigen Stromrichter, insbesondere Motorstromrichter (13), welcher eine Mehrzahl von Leistungshalbleiterschaltern (T3) umfasst und eine an seinem Eingang anliegende Gleichspannung in eine vorzugsweise 3-phasige Wechselspannung umwandelt, einen zwischen dem Zwischenkreis (11) und dem ausgangsseitigen Stromrichter (13) angeordneten Resonanzkreis (12) zur Schaltentlastung der Leistungshalbleiterschalter (T3) des ausgangsseitigen Stromrichters (13), welcher Resonanzkreis (12) wenigstens eine, in einer der beiden Verbindungsleitungen (18, 19) angeordnete Resonanzkreisdrossel (L1; L4, L5) umfasst, sowie Mittel (16, 17; 22, 23) zum Einspeisen der Gleichspannung für den ausgangsseitigen Stromrichter (13), dadurch gekennzeichnet, dass die Einspeisungsmittel (16, 17; 22, 23) zwischen dem Resonanzkreis (12) und dem ausgangsseitigen Stromrichter (13) an die Verbindungsleitungen (18, 19) angeschlossen sind.

2. Stromrichterschaltung nach Anspruch 1, dadurch gekennzeichnet, dass die Einspeisungsmittel einen Netzstromrichter (22) umfassen, welcher über Verbindungsmittel (16, 17) an ein Wechselstromnetz anschliessbar ist.

3. Stromrichterschaltung nach Anspruch 1, dadurch gekennzeichnet, dass die Einspeisungsmittel Verbindungsmittel (16, 17) umfassen, mittels derer die Stromrichterschaltung (10) mit einem Gleichstromnetz verbindbar ist.

4. Stromrichterschaltung nach einem der Ansprüche 2 und 3, dadurch gekennzeichnet, dass der ausgangsseitige Stromrichter ein Motorstromrichter (13) ist, welcher den Motor (15) eines Schienenfahrzeugs versorgt, und dass die Verbindungsmittel ein auf der Schiene laufendes Rad (17) und einen Stromabnehmer (16) für eine Oberleitung umfassen.

5. Stromrichterschaltung nach 4, dadurch gekennzeichnet, dass zwischen dem Resonanzkreis (12) und dem Motorstromrichter (13) ein Bremssteller (14) angeordnet ist.

6. Stromrichterschaltung nach einem der Ansprüche 1 bis 5, dadurch gekennzeichnet, dass der Resonanzkreis (12) einen Resonanzkreiskondensator (C1) umfasst, welcher über einen in Serie liegenden ersten Leistungshalbleiterschalter (T1) mit antiparalleler Diode (D1) mit der wenigstens einen Resonanzkreisdrossel (L1; L4, L5) verbindbar ist.

7. Stromrichterschaltung nach Anspruch 6, dadurch gekennzeichnet, dass die Serieschaltung aus Resonanzkreiskondensator (C1) und erstem Leistungshalbleiterschalter (T1) zu der wenigstens einen Resonanzkreisdrossel (L1; L4, L5) parallelgeschaltet ist.

8. Stromrichterschaltung nach Anspruch 6, dadurch gekennzeichnet, dass die Serieschaltung aus Resonanzkreiskondensator (C1) und erstem Leistungshalbleiterschalter (T1) zwischen den beiden Verbindungsleitungen (18, 19) angeordnet ist.

9. Stromrichterschaltung nach Anspruch 8, dadurch gekennzeichnet, dass dem Resonanzkreiskondensator (C1) ein über einen zweiten Leistungshalbleiterschalter (T5) mit antiparalleler Diode (D5) zuschaltbarer Clampkondensator (C7) parallelgeschaltet ist.

10. Stromrichterschaltung nach einem der Ansprüche 1 bis 9, dadurch gekennzeichnet, dass der Resonanzkreis (12) zwei gleich grosse Resonanzdrosseln (L4, L5) umfasst, die jeweils in einer der beiden Verbindungsleitungen (18, 19) angeordnet sind.

11. Stromrichterschaltung nach einem der Ansprüche 1 bis 10, dadurch gekennzeichnet, dass der Resonanzkreis (12) eine Umschwingentlastungsschaltung (29) enthält, und dass die Umschwingentlastungsschaltung (29) eine zwischen den Verbindungsleitungen (18, 19) angeordnete Serieschaltung aus einer Diode (D6) und einem Widerstand (R2) umfasst.

12. Stromrichterschaltung nach Anspruch 11, dadurch gekennzeichnet, dass der Resonanzkreis (12) einen Kurzschlussstromabschalter (30) enthält, und dass der Kurzschlussstromabschalter (30) einen in einer der Verbindungsleitungen (18, 19) zum Zwischenkreis (11) hin angeordneten dritten Leistungshalbleiterschalter (T6) mit antiparalleler Diode (D7) umfasst.
